# EUROPÄISCHE PATENTANMELDUNG

(11) **EP 4 516 646 A1**
(43) Veröffentlichungstag der Anmeldung: **05.03.2025**
(21) Anmeldenummer: 24190196.6
(22) Anmeldetag: 23.07.2024
(51) Int. Cl.: B62D 33/06, F16F 15/02, B60G 99/00

(54) **KABINENLAGERUNG**

(30) Priorität: 04.09.2023 DE 102023123690
(71) Anmelder: CLAAS Tractor S.A.S., 78141 Vélizy-Villacoublay Cedex (FR)
(72) Erfinder: Monnaie, Paul, 78330 Fontenay Le Fleury (FR); Guiton, Emeric, 72460 Sillé Le Philippe (FR)
(74) Vertreter: CLAAS 365FarmNet GmbH

(57) **Zusammenfassung**

Die vorliegende Erfindung betrifft eine Kabinenlagerung (5) für eine Kabine (3) einer landwirtschaftlichen Arbeitsmaschine (1), insbesondere Traktor (2), wobei die Kabinenlagerung (5) zwei vordere Lagerstellen (6) und zwei hintere Lagerstellen (7), mittels welchen die Kabine (3) bewegbar an einem Fahrzeugrahmen (4) gelagert ist, umfasst, wobei jede Lagerstelle (6 ,7) ein am Fahrzeugrahmen (4) angeordnetes unteres Verbindungselement (8) und ein an einem Rahmenabschnitt (9) der Kabine (3) angeordnetes oberes Verbindungselement (10) aufweist, welche durch jeweils ein Feder-Dämpfermodul (11) relativ zueinander beweglich miteinander verbunden sind, wobei die Kabinenlagerung (5) einen sich in Querrichtung (y) der Kabine (3) erstreckenden, die zwei hinteren Lagerstellen (7) verbindenden Wankstabilisator (12) zur Dämpfung von Roll- und Wankbewegungen aufweist, wobei der Wankstabilisator (12) mit einem in Querrichtung (y) der Kabine (3) verlaufenden Querabschnitt schwenkbar an dem Rahmenabschnitt (9) der Kabine (3) angelenkt ist und mit zwei in Längsrichtung (x) verlaufenden Längsabschnitten (13) durch jeweils ein Anschlusselement (15) mit dem jeweiligen unteren Verbindungselement (8) der hinteren Lagerstellen (7) verbunden ist.

## Beschreibung

Die vorliegende Erfindung betrifft eine Kabinenlagerung gemäß dem Oberbegriff des Anspruches 1. Weiterhin sind eine Kabine mit einer Kabinenlagerung sowie eine landwirtschaftliche Arbeitsmaschine Gegenstand der vorliegenden Erfindung.

Eine Kabinenlagerung der eingangs genannten Art ist aus der DE 10 2015 115 009 A1 bekannt. Die Kabinenlagerung umfasst zwei vordere Lagerstellen und zwei hintere Lagerstellen, mittels welchen die Kabine bewegbar an einem Fahrzeugrahmen gelagert ist. Jede Lagerstelle weist ein am Fahrzeugrahmen angeordnetes unteres Verbindungselement und ein an einem Rahmenabschnitt der Kabine angeordnetes oberes Verbindungselement auf, welche durch jeweils ein Feder-Dämpfermodul relativ zueinander beweglich miteinander verbunden sind. Weiterhin weist die Kabinenlagerung einen sich in Querrichtung der Kabine erstreckenden, die zwei hinteren Lagerstellen verbindenden passiven Wankstabilisator zur Dämpfung von Roll- und Wankbewegungen auf, der endseitig jeweils an dem unteren Verbindungselement einer vorderen und einer hinteren Lagerstelle der Kabine befestigt ist. Zwischen der jeweiligen vorderen Lagerstelle und der hinteren Lagerstelle erstreckt sich jeweils ein Längsstab, welcher das obere Verbindungselement der vorderen Lagerstelle mit dem unteren Verbindungselement der hinteren Lagerstelle verbindet. Die parallel verlaufenden Längsstäbe dienen dazu, Längsbewegungen der Kabine zu unterbinden, insbesondere solche, die in einer Bremssituationen einer landwirtschaftlichen Arbeitsmaschine auftreten. Die aus der DE 10 2015 115 009 A1 bekannte Kabinenlagerung ermöglicht es, sowohl Längsbewegungen als auch Wankbewegungen der Kabine zu dämpfen bzw. zu reduzieren, allerdings ist der Aufbau der Kabinenlagerung komplex.

Ausgehend vom vorstehend genannten Stand der Technik liegt der Erfindung die Aufgabe zugrunde, eine Kabinenlagerung der eingangs genannten Art weiterzubilden, welche sich durch eine geringere Komplexität auszeichnet.

Diese Aufgabe wird erfindungsgemäß durch eine Kabinenlagerung mit den Merkmalen des Anspruches 1, eine Kabine mit den Merkmalen des Anspruches 12 sowie eine landwirtschaftliche Arbeitsmaschine mit den Merkmalen des Anspruches 13 gelöst. Vorteilhafte Weiterbildungen sind Gegenstand der abhängigen Ansprüche.

Gemäß dem Anspruch 1 wird eine Kabinenlagerung für eine Kabine einer landwirtschaftlichen Arbeitsmaschine, insbesondere Traktor, vorgeschlagen, wobei die Kabinenlagerung zwei vordere Lagerstellen und zwei hintere Lagerstellen umfasst, mittels welchen die Kabine bewegbar an einem Fahrzeugrahmen gelagert ist. Jede Lagerstelle weist ein am Fahrzeugrahmen angeordnetes unteres Verbindungselement und ein an einem Rahmenabschnitt der Kabine angeordnetes oberes Verbindungselement auf, welche durch jeweils ein Feder-Dämpfermodul relativ zueinander beweglich miteinander verbunden sind. Weiterhin weist die Kabinenlagerung einen sich in Querrichtung der Kabine erstreckenden, die zwei hinteren Lagerstellen verbindenden Wankstabilisator zur Dämpfung von Roll- und Wankbewegungen auf. Erfindungsgemäß ist vorgesehen, dass der Wankstabilisator mit einem in Querrichtung der Kabine verlaufenden Querabschnitt schwenkbar an dem Rahmenabschnitt der Kabine angelenkt ist und mit zwei abschnittsweise in Längsrichtung der Kabine verlaufenden Längsabschnitten durch jeweils ein Anschlusselement mit dem jeweiligen unteren Verbindungselement der hinteren Lagerstellen verbunden ist.

Durch die erfindungsgemäße Ausgestaltung der Kabinenlagerung kann auf die Verwendung der zusätzlichen Längsstäbe zur Dämpfung von Längsbewegungen der Kabine und damit deren Anbindung an die unteren und oberen Verbindungselemente verzichtet werden, wodurch die Komplexität der Kabinenlagerung reduziert wird. Die beiden abschnittsweise in Längsrichtung verlaufenden Längsabschnitte, die durch jeweils ein Anschlusselement mit dem jeweiligen unteren Verbindungselement der hinteren Lagerstellen verbunden sind, dienen der Unterdrückung von Längsbewegungen, insbesondere bei einem Bremsvorgang der Arbeitsmaschine. Bevorzugt können die beiden abschnittsweise in Längsrichtung verlaufenden Längsabschnitte des Wankstabilisator eine Länge aufweisen, die maximal der halben Erstreckung der Kabine in Längsrichtung entspricht.

Insbesondere kann der Wankstabilisator als passiver Wankstabilisator ausgeführt sein. Der passive Wankstabilisator unterscheidet sich von einem aktiven Wankstabilisator durch das Fehlen eines Aktuators, der ein aktives Verdrehen zweier Drehstabshälften des Wankstabilisators zueinander ermöglicht. Der Wankstabilisator kann einteilig oder mehrteilig ausgeführt sein.

Bevorzugt können die Anschlusselemente zweiteilig ausgeführt sein und einen Befestigungsabschnitt und einen Lagerabschnitt aufweisen, welcher mit dem Befestigungsabschnitt durch reversibel lösbare Verbindungselemente verbunden ist.

Dabei kann das jeweilige Anschlusselement mittels des Befestigungsabschnitts mit dem jeweiligen unteren Verbindungselement der hinteren Lagerstellen verbunden sein, während der Lagerabschnitt zur schwenkbaren Aufnahme eines jeweils in Längsrichtung verlaufenden Längsabschnitts des Wankstabilisators um eine in Querrichtung verlaufende Schwenkachse ausgeführt und eingerichtet sein kann.

Insbesondere kann der jeweilige Lagerabschnitt mittels der Verbindungsmittel in zumindest drei unterschiedlichen Positionen an dem korrespondierenden Befestigungsabschnitt des Anschlusselements feststellbar sein. Der relativ zum Befestigungsabschnitt in verschiedenen Positionen feststellbare Lagerabschnitt ermöglicht eine Einstellung der Steifigkeit des Wankstabilisators.

Bevorzugt kann der jeweilige Lagerabschnitt an dem korrespondierenden Befestigungsabschnitt des Anschlusselements mit unterschiedlichen Neigungswinkeln relativ zur vertikalen Anschlussfläche des unteren Verbindungselements positionierbar sein. Dadurch lassen sich neben einer Grundsteifigkeit des Wankstabilisators zumindest eine geringere sowie zumindest eine höhere Steifigkeit einstellen, indem der Neigungswinkel, den die Schwenkachse und die vertikale Anschlussfläche einschließen, verändert wird. Hierzu können zumindest drei verschiedene Neigungswinkel einstellbar sein. Eine Vergrößerung des zwischen der Schwenkachse und der vertikalen Anschlussfläche eingeschlossenen Neigungswinkels führt zu einer Erhöhung der Steifigkeit, eine Verkleinerung des Neigungswinkels führt zu einer Senkung der Steifigkeit.

Der Lagerabschnitt kann eine erste Durchgangsbohrung aufweisen, die im Wesentlichen achsparallel zur Schwenkachse verläuft, und eine zweite Durchgangsbohrung, die diagonal versetzt zu der ersten Durchgangsbohrung angeordnet ist.

Der Befestigungsabschnitt kann eine erste Durchgangsbohrung aufweisen, die koaxial zur ersten Durchgangsbohrung des Lagerabschnitts angeordnet ist, und es können zumindest drei weitere Durchgangsbohrungen vorgesehen sein, die diagonal versetzt zur ersten Durchgangsbohrung des Befestigungsabschnitts angeordnet sind.

Dabei können die zumindest drei weiteren Durchgangsbohrungen des Befestigungsabschnitts auf einem Kreisbahnabschnitt mit einem Radius angeordnet sein, der dem Abstand der ersten Durchgangsbohrung des Lagerabschnitts zur zweiten Durchgangsbohrung des Lagerabschnitts entspricht. Die erste Durchgangsbohrung des Lagerabschnitts und die erste Durchgangsbohrung des Befestigungsabschnitts liegen fluchtend übereinander. Somit bildet das Verbindungselement in den koaxial zueinander angeordneten ersten Durchgangsbohrungen von Befestigungsabschnitt und Lagerabschnitt eine Achse, um die der Lagerabschnitt schwenkbar ist. Durch das Schwenken kann die zweite Durchgangsbohrung des Lagerabschnitts um die Achse relativ zum Befestigungsabschnitt mit einer der zumindest drei weiteren auf dem Kreisbahnabschnitt angeordneten Durchgangsbohrungen des Befestigungsabschnitts in eine fluchtende Position überführt werden. Dadurch kann der Lagerabschnitt an dem Befestigungsabschnitt mit unterschiedlichen Neigungswinkeln relativ zur vertikalen Anschlussfläche des unteren Verbindungselements für die Befestigung des Befestigungsabschnitts positioniert werden.

Bevorzugt können die Verbindungsmittel als Schraubverbindungen ausgeführt sein. Hierdurch wird eine Einstellung bzw. Verstellung der Steifigkeit des Wankstabilisators mit geringem werkzeugtechnischen Aufwand ermöglicht.

Gemäß einer bevorzugten Weiterbildung kann der Querabschnitt des Wankstabilisators durch zwei halbschalenförmige Befestigungselemente, die jeweils ein Lager aufnehmen, durch welche sich der Querabschnitt des Wankstabilisators erstreckt, an dem Rahmenabschnitt der Kabine angelenkt sein.

Hierzu kann das jeweilige Lager als ein zwei Lagerhälften aufweisendes Gleitlager ausgeführt sein. Dies kann einer Vereinfachung der Montage auf dem Wankstabilisator dienen, wenn dieser einstückig ausgeführt ist.

Die eingangs gestellte Aufgabe wird weiterhin durch eine Kabine mit den Merkmalen des nebengeordneten Anspruches 12 und eine landwirtschaftliche Arbeitsmaschine mit den Merkmalen des nebengeordneten Anspruches 13 gelöst.

Gemäß dem nebengeordneten Anspruch 12 wird eine Kabine mit einer Kabinenlagerung vorgeschlagen, wobei die Kabinenlagerung nach einem der Ansprüche 1 bis 11 ausgeführt ist. Die landwirtschaftliche Arbeitsmaschine, insbesondere ein Traktor, ist zur Lösung der eingangs gestellten Aufgabe mit einer Kabine nach Anspruch 12 ausgeführt. Auf die Vorteile der erfindungsgemäßen Kabinenlagerung darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch eine landwirtschaftliche Arbeitsmaschine mit einer Kabine;
- Fig. 2: eine Teilansicht der Kabine mit einer Kabinenlagerung; und
- Fig. 3: eine perspektivische Detailansicht der Kabinenlagerung.

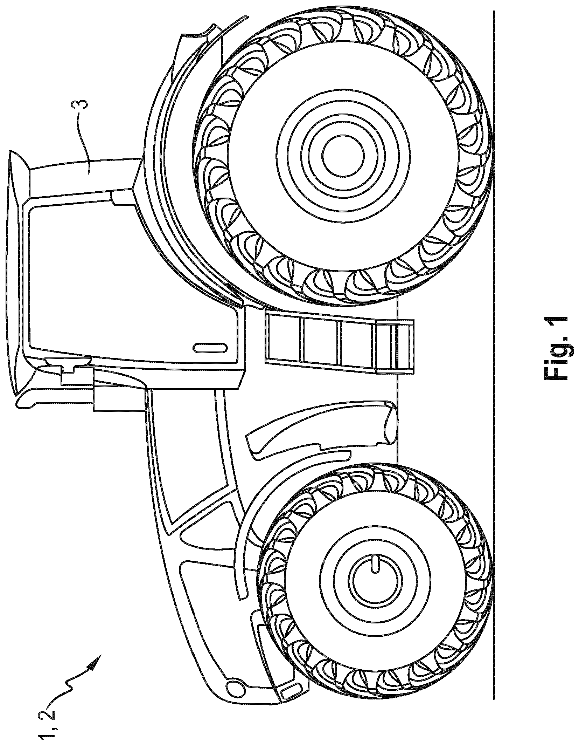

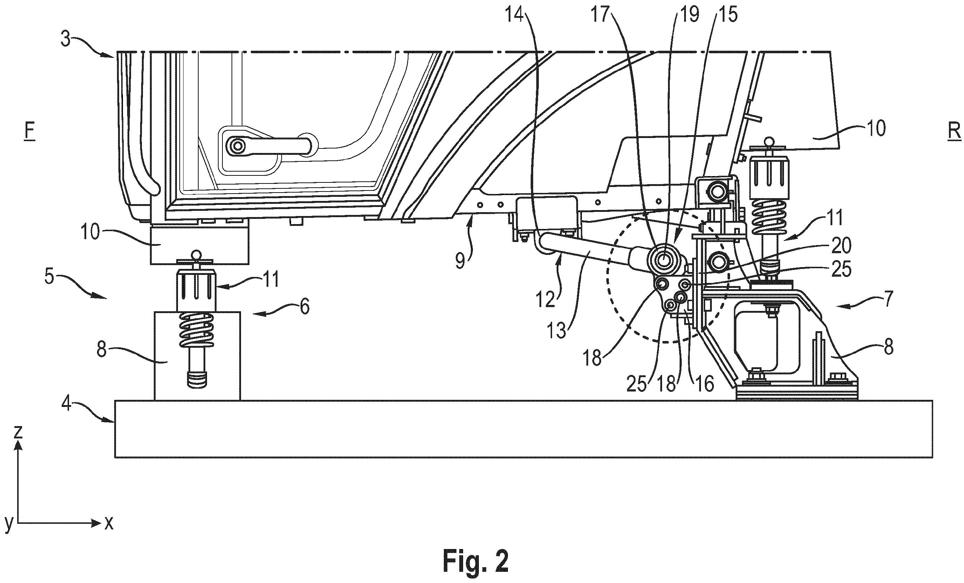

In Fig. 1 ist schematisch und exemplarisch eine landwirtschaftliche Arbeitsmaschine 1 mit einer Kabine 3 dargestellt. Die landwirtschaftliche Arbeitsmaschine 1 ist insbesondere als Traktor 2 ausgeführt. Die Kabine 3 ist mittels einer Kabinenlagerung 5 bewegbar an einem in Fig. 2 schematisch angedeuteten Fahrzeugrahmen 4 gelagert. Der Kabinenlagerung 5 kommt die Aufgabe zu, das Übertragen von Schwingungen, welche beim Befahren von unebenem Terrain auftreten, vom Fahrzeugrahmen 4 auf die Kabine 3 zu verhindern oder zumindest zu minimieren. Ein weiterer Aspekt besteht in der Vermeidung von Längsbewegungen der Kabine 5 aufgrund von Bremsmanövern.

Die Darstellung in Fig. 2 zeigt eine Teilansicht der Kabine 3 mit der Kabinenlagerung 5. Mit F ist die Frontseite und mit R die Rückseite der Kabine 3 bezeichnet. Die Kabinenlagerung 5 umfasst zwei vordere Lagerstellen 6 und zwei hintere Lagerstellen 7, mittels welchen die Kabine 3 bewegbar an dem Fahrzeugrahmen 4 gelagert ist. Die vorderen Lagerstellen 6 sind im Bereich der Frontseite F und die hinteren Lagerstellen 7 im Bereich der Rückseite R der Kabine 3 angeordnet.

Jede Lagerstelle 6, 7 weist ein am Fahrzeugrahmen 4 angeordnetes unteres Verbindungselement 8 und ein an einem Rahmenabschnitt 9 der Kabine 3 angeordnetes oberes Verbindungselement 10 auf. Das jeweilige untere Verbindungselement 8 und das korrespondierende obere Verbindungselement 10 sind jeweils durch ein sich in Hochrichtung z der Kabine 3 erstreckendes Feder-Dämpfermodul 11 relativ zueinander beweglich miteinander verbunden. Weiterhin weist die Kabinenlagerung 5 einen sich in Querrichtung y der Kabine 3 erstreckenden, die zwei hinteren Lagerstellen 7 verbindenden Wankstabilisator 12 zur Dämpfung von Roll- und Wankbewegungen auf.

Der, insbesondere passive, Wankstabilisator 12 ist im Wesentlichen U-förmig oder bügelförmig ausgeführt und weist einen in Querrichtung y verlaufenden Querabschnitt und zwei abschnittweise in Längsrichtung x verlaufende Längsabschnitte 13. Der Querabschnitt des Wankstabilisators 12 ist durch zwei zueinander beabstandet am Rahmenabschnitt 9 angeordnete halbschalenförmige Befestigungselemente 14 befestigt. Die beiden Befestigungselemente 14 nehmen jeweils ein Lager auf, durch welche sich der Querabschnitt des Wankstabilisators 12 erstreckt, so dass der Wankstabilisator 12 schwenkbar an dem Rahmenabschnitt 9 der Kabine 3 angelenkt ist.

Der Wankstabilisator 12 ist mit den Enden seiner beiden abschnittweise in Längsrichtung x der Kabine 3 verlaufenden Längsabschnitten 13 durch jeweils ein Anschlusselement 15 mit dem jeweiligen unteren Verbindungselement 8 der hinteren Lagerstellen 7 verbunden. Die beiden abschnittsweise in Längsrichtung x verlaufenden Längsabschnitte 13 weisen eine Länge auf, die maximal der halben Erstreckung der Kabine 3 in Längsrichtung x entspricht.

Die Anschlusselemente 15 sind zweiteilig ausgeführt. Die Anschlusselemente 15 weisen einen Befestigungsabschnitt 16 und einen Lagerabschnitt 17 auf. Der Lagerabschnitt 17 ist mit dem Befestigungsabschnitt 16 durch reversibel lösbare Verbindungsmittel 18 verbunden. Die Verbindungsmittel 18 sind hier und vorzugsweise als Schraubverbindungen ausgeführt. Der Lagerabschnitt 17 ist mit dem Befestigungsabschnitt 16 durch zwei als Schraubverbindungen ausgeführte Verbindungsmittel 18 verbunden.

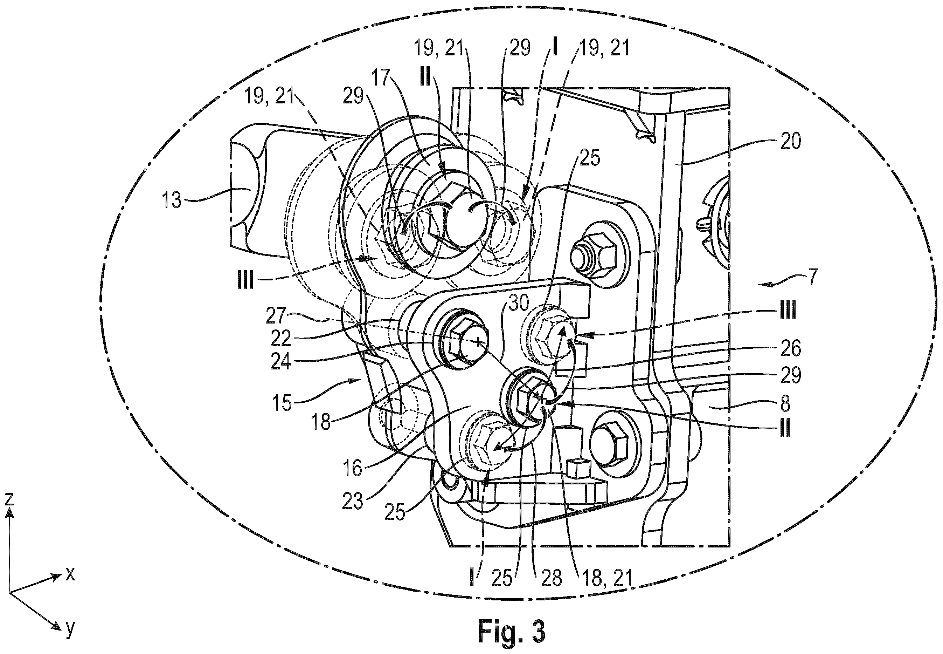

Der jeweilige Lagerabschnitt 17 ist zur schwenkbaren Aufnahme des jeweils in Längsrichtung verlaufenden Längsabschnitts 13 des Wankstabilisators 12 um eine in Querrichtung y verlaufende Schwenkachse 19 ausgeführt und eingerichtet. Die Lage respektive die Neigung der Schwenkachse 19 ist relativ zur vertikalen Anschlussfläche 20 des unteren Verbindungselementes 8, an welcher der Befestigungsabschnitt 16 befestigt ist, verstellbar, was nachstehend anhand von Fig. 3 näher beschrieben ist.

In Fig. 3 ist eine perspektivische Detailansicht der Kabinenlagerung 5 gemäß Fig. 2 dargestellt. Der Befestigungsabschnitt 16 ist durch eine Schraubverbindung an der vertikalen Anschlussfläche 20 des unteren Verbindungselementes 8 angeordnet. Der Lagerabschnitt 17 ist mit einem endseitigen Abschnitt des Längsabschnitts 13 durch eine Schraubverbindung 21 oder dergleichen verbunden. Dabei bildet die Schraubverbindung 21 die Schwenkachse 19, um welche der Längsabschnitt 13 schwenkbar ist. Der Lagerabschnitt 17 ist mittels der Verbindungsmittel 18 in zumindest drei unterschiedlichen Positionen I, II, III an dem Befestigungsabschnitt 16 feststellbar. Die Position I und Position III sind strichliniert dargestellt, um deren Lage anzudeuten, die durch eine Verstellung einnehmbar ist.

Insbesondere ist der Lagerabschnitt 17 an dem Befestigungsabschnitt 16 mit unterschiedlichen Neigungswinkeln relativ zur vertikalen Anschlussfläche 20 des unteren Verbindungselements 8 positionierbar. Dadurch lässt sich die Lage der Schwenkachse 19 modifizieren.

Der Lagerabschnitt 17 weist eine erste Durchgangsbohrung 22 auf, die im Wesentlichen achsparallel zur Schwenkachse 19 verläuft, und eine zweite Durchgangsbohrung 23, die diagonal versetzt zu der ersten Durchgangsbohrung 22 angeordnet ist.

Der Befestigungsabschnitt 16 weist eine erste Durchgangsbohrung 24 auf, die koaxial zur ersten Durchgangsbohrung 22 des Lagerabschnitts 17 angeordnet ist. Weiterhin sind zumindest drei weitere Durchgangsbohrungen 25 vorgesehen sind, die diagonal versetzt zur ersten Durchgangsbohrung 24 des Befestigungsabschnitts 16 angeordnet sind.

Die jeweiligen Durchgangsbohrungen 22, 23, 24 und 25 dienen der Aufnahme der Verbindungsmittel 18, durch welche der Lagerabschnitt 17 mit dem Befestigungsabschnitt 16 in den zumindest drei unterschiedlichen Positionen I, II, III festlegbar ist.

Die zumindest drei weiteren Durchgangsbohrungen 25 des Befestigungsabschnitts 16 sind auf einem Kreisbahnabschnitt 26 mit einem Radius 30 angeordnet, der dem Abstand des Mittelpunkts der ersten Durchgangsbohrung 22 des Lagerabschnitts 17 zum Mittelpunkt der zweiten Durchgangsbohrung 23 des Lagerabschnitts 17 entspricht.

Das Einstellen einer von Position II abweichenden Position I oder III erfolgt durch das Lösen und Entfernen des Verbindungsmittels 18, welches sich durch die zweiten Durchgangsbohrungen 23 und 25 des Lagerabschnitt 17 und des Befestigungsabschnitts 16 erstreckt. Somit ist der Lagerabschnitt 17 um eine durch das Verbindungselement 18 in den koaxial zueinander angeordneten ersten Durchgangsbohrungen 22, 24 von Befestigungsabschnitt 16 und Lagerabschnitt 17 gebildete Achse 27 schwenkbar, was durch Pfeile 28, 29 veranschaulicht ist. Dabei führt eine Vergrößerung des Neigungswinkels durch Verdrehen im Uhrzeigersinn gemäß Pfeil 28 zu einer Senkung der Steifigkeit des Wankstabilisators 12. Hingegen bewirkt eine Verkleinerung des Neigungswinkels durch Verdrehen im Gegenuhrzeigersinn gemäß Pfeil 29 eine Erhöhung der Steifigkeit.

Die erste Durchgangsbohrung 22 des Lagerabschnitts 17 und die erste Durchgangsbohrung 24 des Befestigungsabschnitts 16 liegen fluchtend übereinander, während die zweite Durchgangsbohrung 23 des Lagerabschnitts 17 durch Schwenken um die Achse 27 relativ zum Befestigungsabschnitt 16 mit einer der zumindest drei weiteren auf dem Kreisbahnabschnitt 26 angeordneten Durchgangsbohrungen 25 des Befestigungsabschnitts 16 in eine fluchtende Position überführbar ist, so dass das Verbindungsmittel 18 den Befestigungsabschnitt 16 und den Lagerabschnitt 17 durchdingend angeordnet werden kann. Somit kann der Lagerabschnitt 17 an dem Befestigungsabschnitt 16 mit unterschiedlichen Neigungswinkeln relativ zur vertikalen Anschlussfläche 20 für den Befestigungsabschnitt 16 des unteren Verbindungselements 8 positioniert werden.

### Bezugszeichenliste

- 1: Arbeitsmaschine
- 2: Traktor
- 3: Kabine
- 4: Fahrzeugrahmen
- 5: Kabinenlagerung
- 6: Vordere Lagerstelle
- 7: Hintere Lagerstelle
- 8: Unteres Verbindungselement
- 9: Rahmenabschnitt von 3
- 10: Oberes Verbindungselement
- 11: Feder-Dämpfermodul
- 12: Wankstabilisator
- 13: Längsabschnitt
- 14: Befestigungselement
- 15: Anschlusselement
- 16: Befestigungsabschnitt
- 17: Lagerabschnitt
- 18: Verbindungsmittel
- 19: Schwenkachse
- 20: Anschlussfläche
- 21: Schraubverbindung
- 22: Erste Durchgangsbohrung
- 23: Zweite Durchgangsbohrung
- 24: Erste Durchgangsbohrung
- 25: Durchgangsbohrung
- 26: Kreisbahnabschnitt
- 27: Achse
- 28: Pfeil
- 29: Pfeil
- 30: Radius
- x: Längsrichtung
- y: Querrichtung
- z: Hochrichtung

## Patentansprüche

1. Kabinenlagerung (5) für eine Kabine (3) einer landwirtschaftlichen Arbeitsmaschine (1), insbesondere Traktor (2), wobei die Kabinenlagerung (5) zwei vordere Lagerstellen (6) und zwei hintere Lagerstellen (7), mittels welchen die Kabine (3) bewegbar an einem Fahrzeugrahmen (4) gelagert ist, umfasst, wobei jede Lagerstelle (6 ,7) ein am Fahrzeugrahmen (4) angeordnetes unteres Verbindungselement (8) und ein an einem Rahmenabschnitt (9) der Kabine (3) angeordnetes oberes Verbindungselement (10) aufweist, welche durch jeweils ein Feder-Dämpfermodul (11) relativ zueinander beweglich miteinander verbunden sind, wobei die Kabinenlagerung (5) einen sich in Querrichtung (y) der Kabine (3) erstreckenden, die zwei hinteren Lagerstellen (7) verbindenden Wankstabilisator (12) zur Dämpfung von Roll- und Wankbewegungen aufweist, **dadurch gekennzeichnet, dass** der Wankstabilisator (12) mit einem in Querrichtung (y) der Kabine (3) verlaufenden Querabschnitt schwenkbar an dem Rahmenabschnitt (9) der Kabine (3) angelenkt ist und mit zwei in Längsrichtung (x) verlaufenden Längsabschnitten (13) durch jeweils ein Anschlusselement (15) mit dem jeweiligen unteren Verbindungselement (8) der hinteren Lagerstellen (7) verbunden ist.

2. Kabinenlagerung (5) nach Anspruch 1, **dadurch gekennzeichnet, dass** die Anschlusselemente (15) zweiteilig ausgeführt sind und einen Befestigungsabschnitt (16) und einen Lagerabschnitt (17) aufweisen, welcher mit dem Befestigungsabschnitt (16) durch reversibel lösbare Verbindungsmittel (18) verbunden ist.

3. Kabinenlagerung (5) nach Anspruch 2, **dadurch gekennzeichnet, dass** das jeweilige Anschlusselement (15) mittels des Befestigungsabschnitts (16) mit dem jeweiligen unteren Verbindungselement (8) der hinteren Lagerstellen (7) verbunden ist und dass der Lagerabschnitt (17) zur schwenkbaren Aufnahme des jeweils in Längsrichtung (x) verlaufenden Längsabschnitts (13) des Wankstabilisators (11) um eine in Querrichtung (y) verlaufende Schwenkachse (19) ausgeführt und eingerichtet ist.

4. Kabinenlagerung (5) nach Anspruch 2 oder 3, **dadurch gekennzeichnet, dass** der jeweilige Lagerabschnitt (17) mittels der Verbindungsmittel (18) in zumindest drei unterschiedlichen Positionen (I, II, III) an dem Befestigungsabschnitt (16) feststellbar ist.

5. Kabinenlagerung (5) nach Anspruch 2 bis 4, **dadurch gekennzeichnet, dass** der Lagerabschnitt (17) an dem Befestigungsabschnitt (16) mit unterschiedlichen Neigungswinkeln relativ zur vertikalen Anschlussfläche (20) des unteren Verbindungselements (8) positionierbar ist.

6. Kabinenlagerung (5) nach einem der Ansprüche 2 bis 5, **dadurch gekennzeichnet, dass** der Lagerabschnitt (17) eine erste Durchgangsbohrung (22) aufweist, die im Wesentlichen achsparallel zur Schwenkachse (19) verläuft, und eine zweite Durchgangsbohrung (23), die diagonal versetzt zu der ersten Durchgangsbohrung (22) angeordnet ist.

7. Kabinenlagerung (5) nach einem der Ansprüche 2 bis 6, **dadurch gekennzeichnet, dass** der Befestigungsabschnitt (16) eine erste Durchgangsbohrung (24) aufweist, die koaxial zur ersten Durchgangsbohrung (22) des Lagerabschnitts (17) angeordnet ist, und dass zumindest drei weitere Durchgangsbohrungen (25) vorgesehen sind, die diagonal versetzt zur ersten Durchgangsbohrung (24) des Befestigungsabschnitts (16) angeordnet sind.

8. Kabinenlagerung (5) nach Anspruch 7, **dadurch gekennzeichnet, dass** die zumindest drei weiteren Durchgangsbohrungen (25) des Befestigungsabschnitts (16) auf einem Kreisbahnabschnitt (26) mit einem Radius (30) angeordnet sind, der dem Abstand der ersten Durchgangsbohrung (22) des Lagerabschnitts (17) zur zweiten Durchgangsbohrung (23) des Lagerabschnitts (17) entspricht.

9. Kabinenlagerung (5) nach einem der Ansprüche 2 bis 8, **dadurch gekennzeichnet, dass** die Verbindungsmittel (18) als Schraubverbindungen (21) ausgeführt sind.

10. Kabinenlagerung (5) nach einem der vorangehenden Ansprüche, **dadurch gekennzeichnet, dass** der Querabschnitt des Wankstabilisators (12) durch zwei halbschalenförmige Befestigungselemente (14), die jeweils ein Lager aufnehmen, durch welche sich der Querabschnitt des Wankstabilisators (12) erstreckt, an dem Rahmenabschnitt (9) der Kabine (3) angelenkt ist.

11. Kabinenlagerung (5) nach Anspruch 10, **dadurch gekennzeichnet, dass** das jeweilige Lager als ein zwei Lagerhälften aufweisendes Gleitlager ausgeführt ist.

12. Kabine (3) mit einer Kabinenlagerung (5), die nach einem der vorangehenden Ansprüche ausgeführt ist.

13. Landwirtschaftliche Arbeitsmaschine (1), insbesondere Traktor (2), mit einer Kabine (3) nach Anspruch 12.
